Europäisches Patentamt

European Patent Office

Office européen des brevets

(19)

(11) EP 1 099 946 A1

(12) EUROPÄISCHE PATENTANMELDUNG

(43) Veröffentlichungstag:
16.05.2001  Patentblatt 2001/20

(51) Int Cl.⁷: **G01M 3/40**, G01M 3/18,
G01V 3/08, G01M 3/04

(21) Anmeldenummer: 99122356.1

(22) Anmeldetag: 10.11.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(71) Anmelder:
• ORPHEUS Geophysik Gesellschaft für
Baugrund- und Umweltanalytik mbH
65830 Kriftel (DE)

• Hergenröther, Dirk
63667 Nidda (DE)

(72) Erfinder: Hergenröther, Dirk
63667 Nidda (DE)

(74) Vertreter: Schubert, Siegmar, Dipl.-Ing. et al
Patentanwälte
Dannenberg Schubert Gudel
Grosse Eschenheimer Strasse 39
60313 Frankfurt (DE)

(54) **Leckanzeigeeinrichtung für Kunststoffabdichtungen sowie entsprechendes Verfahren zur Leckanzeige**

(57)    Bei einem Leckortungssystem für Kunststoffabdichtungen sollen mechanisch widerstandsfähige dreischichtige Kunststoffwandungen (1) genutzt werden, um etwaige Leckagen unkompliziert zu orten. Hierzu ist in der dreischichtig und vollflächig aufgebauten
Kunststoffwandung (1) eine metallisch elektrisch leitende Schicht (4) eingebunden, die als eine erste Stromelektrode dient. Diese bildet mit einer zweiten Stromelektrode (6), die in einem die Kunststoffabdichtung umgebenden elektrisch leitenden Material (5) angeordnet
ist, einen Stromkreis mit einer Stromquelle (18) und einer Strommesseinrichtung (19). Dabei sind wenigstens
zwei elektrische Potentialelektroden (7,8), die mit einer
Spannungsmesseinrichtung (20) verbunden sind, neben der Kunststoffabdichtung in dem elektrisch leitenden Material (5) angeordnet. Weiterhin ist eine Auswerteeinheit zur Ermittlung des scheinbaren spezifischen
elektrischen Widerstands aus dem mit der Strommesseinrichtung (19) gemessenen Strom und der mit der
Spannungsmesseinrichtung (20) gemessenen Spannung vorgesehen.

Fig.1

**Beschreibung**

Die Erfindung betrifft ein Leckanzeigeeinrichtung für Kunststoffabdichtungen in Form von dreischichtigen Kunststoffwandungen von Rohren, Formteilen, Schächten, Kanälen, Behältern, Wannen, Flächen oder dergleichen nach dem Oberbegriff des Anspruchs 1.

Weitere Aspekte der Erfindung betreffen Leckanzeigeverfahren nach dem obergriff des Anspruches 9 bzw. 10.

Die Leckanzeigeeinrichtung bzw. das Leckzeigeverfahren kann insbesondere in Mülldeponien vorteilhaft eingesetzt werden, ist jedoch hierauf nicht beschränkt.

Dreilagige Dichtungsbahnen mit zwei äußeren Kunststoff lagen und einer dazwischen eingebetteten Aluminiumschicht sind beispielsweise zur Abdichtung von Deponien bereits bekannt. Der Aufbau dieser dreilagigen Dichtungsbahnen soll dazu dienen, einen Durchlaß verschiedener Schadstoffe zu verhindern, insbesondere soll die Aluminiumschicht oder eine andere Metallschicht als Sperrschicht für chlorierte Kohlenwasserstoffe wirken.

Zum Prüfen der Dichtigkeit von Flüssigkeitsbehältern für Lebensmittel, deren Behälterwand aus einer Verbundfolie gebildet ist, in die eine Metallschicht eingebettet ist, war es bereits bekannt, an oder in dem Behälter ein dünnes elektrisches leitfähiges Band, welches aus einem Polyolefin, nämlich Polyäthylen hoher Dichte oder Polypropylen oder dessen Copolymeren besteht (FR-A-2 362 051), anzuordnen. Die Metallschicht in der Verbundfolie wird dabei nicht zur Leckerkennung herangezogen; eine Leckortung ist nicht vorgesehen.

Bei einer bekannten Leckanzeigeeinrichtung nach dem Oberbegriff des Anspruchs 1 betreffend einen zu überwachenden Tank oder eine Leitung mit einer Außenwand aus Fiberglas verstärktem Polyester und einer inneren Korrosionsschutzschicht wird von der Verwendung einer Metallschicht zwischen der Außenwand und der inneren Korrosionsschicht ausgegangen, wobei allerdings die Metallschicht durch eine leitende oder halbleitende Schicht mit fein verteiltem Metall, Kohlestoff oder Graphit ersetzt werden soll (US 4 110 739). Letztere Schicht und eine in den Tank eingesetzte Elektrode sind in einem Stromkreis mit einer Batterie und einem Alarmgeber angeordnet, der als Summer, Blitzlicht oder dergleichen ausgebildet sein kann. - Damit ist eine Leckdetektion in der Tankwand, aber keine Lekkortung möglich, wo das Leck in der Tankwand auftritt.

Ein zum Stand der Technik gehörender Flüssigkeitsbehälter mit einer porösen Wand, die mit einer Metallfolie und einer Flüssigkeitssperre direkt an dem Behälterinneren ausgebildet ist, wird in ähnlicher Weise auf Leckage überwacht (US 3 252 155). HIerzu sind die Metallfolie und ein in den Behälter hineinreichendes elektrisches Kontaktelement in einem Stromkreis mit einer Stromquelle und einer Warneinrichtung angeordnet, die optisch oder akustisch wirkt, beispielsweise als Lampe, Horn, Summer oder dergleichen. Ein Alarm wird ausgelöst, sobald irgendwo in der Behälterwand ein Leck auftritt. - Eine Ortung der Leckstelle ist damit aber nicht möglich.

Weiterhin war eine Verbundfolie zum Auskleiden von Flüssigkeitsbehältern bekannt, die aus mindestens drei übereinander angeordneten Lagen zusammengesetzt ist, von denen eine obere Folienlage und eine untere Folienlage elektrisch neutral sind (DE-A-33 22 772). Eine mittlere zwischen den genannten Folienlagen angeordnete Folienlage ist in leitfähige, jeweils elektrisch getrennte Felder aufgeteilt, um den Ort eines in dem Flüssigkeitsbehälter auftretenden Lecks bestimmen zu können Für die Alarmmeldung mit Ortsanzeige wird zwischen eine leitfähige Behälterflüssigkeit und den Feldern eine Spannung gelegt, welche im Falle eines Eindringens von Behälterflüssigkeit in ein Feld einen Kurzschlußstrom hervorruft. Die leitfähigen Felder sowie Randabschnitte an den Rändern der nebeneinanderliegenden Verbundfolie können aus einer leitfähigen Klebeschicht oder aus einer Graphitfolie bestehen. Diese Schicht ist insbesondere auch im Hinblick auf die Aufteilung in getrennte Felder nicht abdichtend.

Weiterhin ist es bekannt, für Deponien zwei Lagen aus PEHD-Folie am Rand zu verbinden und den dadurch gebildeten Innenraum zwischen den Lagen mit elektrisch leitfähigem Material wie Wasser oder nassen Sand zu füllen, in dem eine Elektrodenanordnung untergebracht ist (US-A-4 947 470). Mit der Elektrodenanordnung sollen elektrische Felder festgestellt werden, die sich um ein Leck in dem Folienverbund bilden. Hierzu ist eine Stromquelle elektrisch mit drei Elektroden in der Weise verbindbar, daß die Stromquelle zwischen zwei der drei Elektroden umgeschaltet werden kann. Eine der nicht umgeschalteten Elektroden ist in dem Hohlraum des Folienverbunds angeordnet. Eine weitere der drei Elektroden, und zwar eine der beiden umschaltbaren Elektroden, ist in dem Deponiematerial oberhalb des Folienverbunds eingebettet, während die dritte, ebenfalls umschaltbare Elektrode unterhalb des Folienverbunds in dem Grund ruht. Die Zuleitungen der Detektoranordnung in dem Zwischenraum des Folienverbunds muß von dem Material, das durch die Folien eingeschlossen wird, in jedem Fall isoliert herausgeführt werden. Die Detektoranordnung und das diese umgebende Material hat keine Dichtfunktion. Abgesehen davon ist das isolierte Herausführen der Vielzahl der Anschlußdrähte der Detektoranordnung kompliziert und aufwendig. Zur Bestimmung eines Lecks werden nur Potentialdifferenzen bzw. die Lage von elektrischen Feldern gemessen; es erfolgt keine Ermittlung des scheinbaren spezifischen elektrischen Widerstands aufgrund einer Messung des einqespeisten Stroms mit dem für dieses ortungssystem bzw. Verfahren typischen Vorteil, daß eine Differenzmessung bzw. Eichung nicht erforderlich ist.

Zum Stand der Technik gehört weiterhin eine Leckageüberwachung für die Deponieabdichtungen, bei der mit Elektroden nicht in bestehende Oberflächenabdichtungen eingegriffen werden muß. Vielmehr sind sogenannte Screening-Elektroden in Abständen zueinander in einem Raster über der Fläche einer Dichtungsbahn angeordnet. Um die Dichtungsbahn befinden sich weiterhin Basiselektroden sowie in größerem Abstand zu diesen eine Fernpolelektrode. Die genannten Elektroden stehen mit einer Meß-und Auswerteeinheit in Verbindung. Im Falle eines Lecks in der Dichtungsbahn entstehen elektrischen Stromänderungen, die von den Screening-Elektroden erfaßt werden. Es erfolgt eine Auswertung des scheinbaren spezifischen elektrischen Widerstands, siehe hierzu generell: "Angewandte Geophysik", Band 2, Seite 34, Abschnitt 1.2.1.2.3 "Scheinbarer spezifischer elektrischer Widerstand", Hrsg. Militzer, H. und Weber, F., Springer Verlag, Wien, 1985. - Diese Leckageüberwachung macht jedoch von keiner metallisch elektrisch leitenden Schicht in der Abdichtungsfläche Gebrauch.

Davon ausgehend liegt der vorliegenden Erfindung die Aufgabe zugrunde, ein Leckortungssystem und ein entsprechendes Leckortungsverfahren für eine dreischichtig und vollflächig aufgebaute Kunststoffwandung, in die eine metallisch elektrisch leitende Schicht eingebunden ist, zu schaffen, bei der mechanisch widerstandsfähige feste mechanische Aufbau der Kunststoffwandung und deren Dichtwirkung genutzt werden können, und welches eine unkomplizierte Ortung einer etwaig auftretenden Leckage gewährleistet.

Diese Aufgabe wird gemäß dem kennnzeichnenden Teil des Anspruchs 1 für die Überwachungseinrichtung bzw. gemäß den Verfahrensschritten gemäß dem Verfahren nach Anspruch 9 bzw. 10 gelöst.

Hierbei ist wesentlich, daß die metallisch elektrisch leitende Schicht, die in die dreischichtig vollflächig aufgebaute Kunststoffwandung eingebunden ist, als eine Elektrode, insbesondere Flächenelektrode, benutzt wird, aus der im Falle einer Leckage in der normalerweise vollständig isolierenden Kunststoffwandung ein signifikanter Strom zu einer zweiten Stromelektrode fließt, die ebenso wie mindestens zwei elektrische Potentialelektroden neben der Kunststoffwandung in das diese umgebende elektrisch leitende Material, beispielsweise das Deponiematerial, eingebettet ist. Außer der Messung des über die Stromelektroden fließenden Stroms wird die Spannung zwischen zwei der elektrischen Potentialektroden gemessen. Die Meßergebnisse der Strommessung und der Spannungsmessung werden zur Errechnung eines scheinbaren spezifischen elektrischen Widerstands in einem Rechner herangezogen. Die Methode zur Errechnung des scheinbaren spezifischen elektrischen Widerstands $\rho\bullet$ ist an sich seit Jahrzehnten bekannt und folgt der Beziehung:

$$\rho\bullet = G \cdot U/I$$

wobei I der über die Stromelektrode, d.h. die metallisch elektrisch leitende Schicht der dreischichtigen Kunststoffwandung und die Stromelektrode neben dieser Kunststoffabdichtung eingespeiste Strom ist, U die zwischen den elektrischen Potentialelektroden neben der Kunststoffabdichtung gemessene elektrische Spannung als Spannungsabfall, der durch den vorgenannten Strom verursacht ist, darstellt und G ein die geometrische Anordnung der Stromelektroden und der elektrischen Potentialelektroden zueinander charakterisierender Geometriefaktor ist. Befinden sich die elektrischen Potentialelektroden in einem Bereich über oder neben einer intakten Kunststoffabdichtung, so wird ein großer scheinbarer spezifischer elektrischer Widerstand gemessen. Bei Auftreten einer Leckage in der Kunststoffabdichtung im Bereich einer der elektrischen Potentialelektroden wird hingegen ein signifikant kleinerer scheinbarer spezifischer elektrischer Widerstand gemessen.

Bei der erfindungsgemäßen Einrichtung ist wesentlich, daß die metallisch elektrisch leitende Schicht in der dreischichtigen Kunststoffwandung eine verhältnismäßig hohe Leitfähigkeit hat, die beispielsweise größer als diejenige von elektrisch leitendem PEHD-Kunststoff ist. Insbesondere kann die metallisch elektrisch leitende Schicht aus Aluminium bestehen. Die elektrisch leitende Schicht stellt ohne weiteres eine Flächenelektrode dar. Sie kann in wählbarem Abstand zu der Oberfläche der dreischichtigen Kunststoffwandung angeordnet sein, solange sie vollständig isoliert ist. Die metallisch elektrisch leitende Schicht kann völlig ununterbrochen ausgebildet sein, um selbst eine Dichtwirkung zu erzielen. Sie kann auch eine Perforierung aufweisen, die auf eine günstige Produktion dieser Schicht bzw. des Materials, aus dem die Schicht abgeteilt wird, zurückzuführen ist. Unter einer vollflächig aufgebauten Dichtungswandung wird hier auch eine Dichtungswandung verstanden, die eine solche perforierte metallisch elektrisch leitende Schicht aufweist. Als isolierende Schichten der dreischichtigen Kunststoffwandung eignen sich verschiedene Kunststoffe wie PEHD, PP, PVDF. Die Kunststoffwandungen können als dünne oder dicke Platten ausgeführt sein oder zu gewickelten oder extrudierten Rohren geformt sein.

In einer Variante der Einrichtung nach Anspruch 2 und spezieller nach Anspruch 3 bzw. in einer Variante des Verfahrens nach Anspruch 10 kann die metallisch elektrisch leitende Schicht in der dreischichtig und vollflächig aufgebauten Kunststoffwandung als elektrische Potentialelektrode statt als Stromelektrode eingesetzt werden. Im einzelnen dient in diesem Fall die metallisch elektrisch leitende Schicht als erste Potentialelektrode, die mit einer zweiten Potentialelektrode zusammenwirkt, welche neben der Kunststoffabdichtung in das diese umgebende elektrisch leitende Material eingebettet ist. Zur Vervollständigung der Einrichtung, mit der der scheinbare spezifische elektrische Widerstand ermittelt wird, sind in diesem Fall zwei Stromelektroden in dem die Kunststoffabdichtung umgebenden elektrisch leitenden Material im Abstand zueinander angeordnet. Es ist wiederum eine Auswerteeinheit zur Ermittlung des scheinbaren spezifischen elektrischen Widerstands aus dem mit der Strommeßeinrichtung in dem Stromkreis, in dem die Stromelektroden liegen, und aus dem mit der Spannungsmeßeinrichtung gemessenen Spannung an den beiden Potentialelektroden, von denen eine durch die elektrisch leitende Schicht gebildet wird, vorgesehen.

Gemäß Anspruch 4 können die neben der Kunststoffabdichtung installierten Stromelektroden und elektrischen Potentialelektroden in festem Abstand zueinander fest installiert sein. Durch die feste Installation erübrigt sich ein Einbau der Stromelektroden und Potentialelektroden bei jeder Messung. Die Installation der Stromelektroden und der elektrischen Potentialelektroden in festem Abstand zueinander hat den Vorteil einer einfachen Auswertung der Meßergebnisse zur Leckortung.

In universeller Weise ist es jedoch auch möglich, gemäß Anspruch 5 neben der Kunststoffabdichtung Stromelektroden und elektrische Potentialelektroden nicht fest einzubauen, sondern mit beliebigem Abstand zueinander an beliebigen Stellen in dem elektrisch leitenden Material, welches die Kunststoffabdichtung umgibt, zu positionieren. Wenn das elektrisch leitende Material, z.B. in Deponien Erdreich und nicht das Deponiematerial ist, werden die Stromelektroden und Potentialelektroden bei einer längeren Installation weniger angegriffen.

Gemäß Anspruch 6 kann eine der Stromelektroden oder eine der elektrischen Potentialelektroden in weitem Abstand von der Kunststoffabdichtung in dem elektrisch leitenden Material positioniert sein. Diese Stromelektrode oder Potentialelektrode braucht dann nicht umgeschaltet zu werden, wenn eine Umschaltung der anderen Stromelektroden und/oder Potentialelektroden vorgesehen ist, um die Auswertung mit wenig aufwendigen technischen Mitteln für einzelne Meßpunkte aufeinanderfolgend durchzuführen, siehe auch Verfahrensansprüche 12 und 13. Unter dem weiten Abstand gemäß Anspruch 6 bzw. der entfernten Anordnung der Stromelektrode bzw. Potentialelektrode gemäß Anspruch 13 bzw. Anspruch 14 wird ein Abstand verstanden, der um ein Mehrfaches größer als die Dimensionen des zu untersuchenden Objekts ist.

Gemäß Anspruch 7 können die Stromelektrode und die elektrischen Potentialelektroden bzw. bei dem analogen umgekehrten System die elektrische Potentialelektrode und die Stromelektroden, die neben der Kunststoffabdichtung angeordnet sind, jeweils aus mehreren örtlich verteilten Stromelektroden bzw. elektrischen Potentialelektroden bestehen.

Die Potentialelektroden und Stromsonden neben der Kunststoffabdichtung können weitgehend beliebig ausgebildet sein, z.B. als einzelne Punktsonden bzw. Punktelektroden, die aber auch gruppenweise kurzgeschlossen sein können. Statt dessen können auch ringförmige Potentialelektroden und Stromelektroden je nach Einsatzzweck vorgesehen sein, insbesondere wenn es sich um die Leckortung längs eines zylindrischen Körpers wie eines Stauraumkanals oder Schachts handelt. Punktförmige Potentialelektroden bzw. Stromelektroden können den Vorteil einer exakteren Ortung bieten.

Analog dazu kann auch die metallisch elektrisch leitende Schicht in der Kunststoffwandung in mehrere elektrisch isolierte Stromelektroden bzw. elektrische Potentialelektroden unterteilt sein, wobei allerdings der Vorteil der durchgehenden Dichtwirkung der metallisch elektrisch leitenden Schicht wenigstens teilweise beeinträchtigt wird.

Zu den beiden alternativen Verfahren gemäß den Ansprüchen 8 und 10 kann auf die vorangehende Erörterung zu den entsprechenden Einrichtungen gemäß den Ansprüchen 1 und 3 Bezug genommen werden.

Das Verfahren kann in verschiedener Weise bzw. unterschiedlichen Ausbaustufen durchgeführt werden:

Hierzu ist es gemäß Anspruch 11 möglich, vor dem Einleiten des Stroms und den Messungen die Stromelektroden und Potentialelektroden in beliebigem Abstand zueinander an beliebigen Stellen in dem die Kunststoffabdichtung umgebenden elektrisch leitenden Material zu positionieren.

Es ist aber auch möglich, zur leichteren Auswertung der Meßergebnisse eine fest installierte Anordnung von in möglichst gleichmäßigem Abstand zueinander positionierten Stromelektroden und elektrischen Potentialelektroden gemäß Anspruch 4 zu verwenden.

Gemäß Anspruch 12 wird eine fest installierte Anordnung von mehr als zwei Stromelektroden und/ oder mehr als zwei Potentialelektroden neben der in die Kunststoffwandung eingebundenen metallischen Schicht als eine der Stromelektroden oder eine der Potentialelektroden verwendet. Die Stromelektrode kann schrittweise nach einer jeweils erfolgten Messung umgeschaltet werden, d.h. mit der Stromquelle und der Strommeßeinrichtung verbunden werden. Analog kann dazu nach jeder durchgeführten Messung ein Paar elektrischer Potentialelektroden umgeschaltet werden, d.h. an die Spannungsmeßeinrichtung angeschlossen werden. Es kann so eine Vielzahl von örtlichen Bereichen der Kunststoffabdichtung mit nur einer Stromquelle und einer Strommeßeinrichtung und einer Spannungsmeßeinrichtung, wobei die Strommeßeinrichtung und die Spannungsmeßeinrichtung mit einer Auswerteeinheit verbunden sind, zur Leckortung an den diskreten Stellen erfaßt werden.

Im Falle der entfernten Anordnung der Stromelektrode gemäß Anspruch 13 bzw. der Potentialelektrode nach Anspruch 14 braucht diese nicht umgeschaltet zu werden.

Ein Ausführungsbeispiel der Erfindung wird im folgenden anhand einer zeichnung mit einer Figur erläutert, in der ein Sickerwasserschacht in einem Querschnitt in Verbindung mit schematisch angedeuteten Stromelektroden und elektrischen Potentialelektroden sowie mit grundsätzlichen Elementen der elektrischen Schaltungsanordnung dargestellt ist.

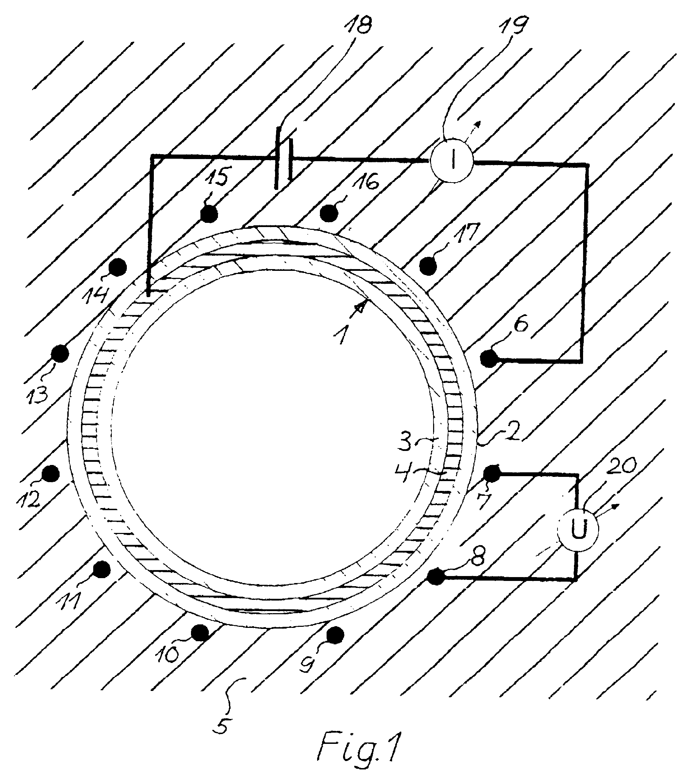

In Fig. 1 ist mit 1 eine dreischichtige Kunststoffwandung bezeichnet, die eine Kunststoffabdichtung eines Sickerwasserschachts darstellt. Die Kunststoffwandung besteht aus einer Außenschicht 2, einer Innenschicht 3, jeweils aus PEHD oder einem anderen abdichtenden und elektrisch isolierenden Kunststoff, sowie einer zwischen der Außenschicht 2 und der Innenschicht 3 eingebetteten und mit diesen zu einer festen Einheit verbundenen metallisch leitenden Schicht 4.

Um die Außenschicht 2 sind Stromelektroden/elektrische Potentialelektroden 6-17 in einer untereinander äquidistanten Anordnung in einem gleichbleibenden Abstand zu der Außenschicht 2 zumindest teilweise in das die Kunststoffwandung umgebende elektrisch leitende Material 5 eingebettet. Bei den Stromelektroden/Potentialelektroden handelt es sich um die gleichen metallischen Körper, die in Draufsicht annähernd punktförmig im Vergleich zu den Abmessungen der Kunststoffwandung sind und deren Eigenschaft als Stromelektrode oder Potentialelektrode von dem Anschluß an die äußere Schaltungsanordnung abhängt, der zu einer vollständigen Ortung rund um die Kunststoffwandung 1 verändert werden kann.

In der in Fig. 1 dargestellten Konfiguration stellt 6 eine Stromelektrode dar, die eine zweite Stromelektrode in Bezug auf die erste durch die metallisch elektrisch leitende Schicht 4 gebildete Stromelektrode ist. Beide Stromelektroden sind an einen Stromkreis mit einer Stromquelle 18 und einer Strommeßeinrichtung 19 angeschlossen. Der Anschluß der metallisch elektrisch leitenden Schicht 4 ist dabei fest, und der Anschluß an die Stromelektrode 6 veränderbar. In einem Spannungsgemßkreis mit einer Spannungsmeßeinrichtung 20 sind elektrische Potentialelektroden 7 und 8 angeschlossen.

Nicht dargestellt ist in Fig. 1, wie die Strommeßeinrichtung 19 und die Spannungsmeßeinrichtung 20 mit einer Auswerteeinheit verbunden sind, in der der mit der Strommeßeinrichtung 19 gemessene Strom und die mit der Spannungsmeßeinrichtung 20 erfaßte Spannung zur Ermittlung des scheinbaren spezifischen elektrischen Widerstands ausgewertet werden.

Nach der Ermittlung des scheinbaren spezifischen elektrischen widerstands in der in Fig. 1 dargestellten Konfiguration können die elektrischen Potentialelektroden und die zweite Stromelektrode schrittweise umgeschaltet werden, so daß beispielsweise jetzt bei der Bezugsziffer 7 die zweite elektrisch Stromelektrode liegt, während der Spannungsmeßkreis an elektrische Potentialelektroden 8 und 9 angeschlossen ist. Diese schrittweise Fortschaltung der zweiten Stromelektroden und der beiden elektrischen Potentialelektroden kann bis zu einem vollständigen Umlauf um die zylindrische Kunststoffwandung zur Leckortung einer beliebigen Stelle längs des Umfangs der Kunststoffabdichtung fortgesetzt werden.

**Patentansprüche**

1. Leckanzeigeeinrichtung für Kunststoffabdichtungen in Form von dreischichtigen Kunststoffwandungen von Rohren, Formteilen, Schächten, Kanälen, Behältern, Wannen, Flächen oder dergleichen, wobei in einer dreischichtig und vollflächig aufgebauten Kunststoffwandung (1), in die eine metallisch elektrisch leitende Schicht (4) eingebunden ist, die metallisch elektrisch leitende Schicht (4) als eine erste Stromelektrode dient, die mit einer zweiten Stromelektrode (6), die in einem die Kunststoffabdichtung umgebenden elektisch leitenden Material (5) angeordnet ist, einen Stromkreis mit einer Stromquelle (18) bildet.
**dadurch gekennzeichnet**,
daß in dem Stromkreis zur Leckortung eine strommeßeinrichtung (19) angeordnet ist, daß wenigstens zwei elektrische Potentialelektroden (7,8) neben der Kunststoffabdichtung in dem elektrisch leitenden Material (5) angeordnet sind, die mit einer Spannungsmeßeinrichtung (20) verbunden sind, und daß eine Auswerteeinheit zur Ermittlung des scheinbaren spezifischen elektrischen Widerstands aus dem mit der Strommeßeinrichtung (19) gemessenen Strom und der mit der Spannungsmeßeinrichtung (20) gemessenen Spannung vorgesehen ist.

2. Leckanzeigeeinrichtung nach Anspruch 1,
**dadurch gekennzeichnet**,
daß die Stromelektroden und die elektrischen Potentialelektroden (6-17) so ausgeführt sind, daß sie wahlweise als Stromelektrode (6) oder als elektrische Potentialelektrode (7,8) anschließbar sind.

3. Leckanzeigeeinrichtung nach Anspruch 2,
**dadurch gekennzeichnet**,
daß die metallisch elektrisch leitende Schicht (4) der dreischichtig und vollflächig aufgebauten Kunststoffwandung als eine erste Potentialelektrode dient, daß die erste Potentialelektrode und eine neben der Kunststoffabdichtung in das diese umgebende elektrisch leitende Material (5) eingebettete zweite Potentialelektrode an eine Spannungsmeßeinrichtung (20) angeschlossen sind, daß zwei Stromelektroden in dem die Kunststoffabdichtung umgebenden elektrisch leitenden Material (5) eingebettet sind und in einem Stromkreis mit einer Stromquelle (18) und einer Strommeßeinrichtung (19) angeordnet sind und daß eine Auswerteeinrichtung zur Ermittlung des scheinbaren spezifischen elektrischen Widerstands aus dem mit der Strommeßeinrichtung (19) gemessenen Strom und der mit der Spannungsmeßeinrichtung (20) gemessenen Spannung vorgesehen ist.

4. Leckanzeigeeinrichtung nach einem oder mehreren der Ansprüche 1, 2 und 3,
   **dadurch gekennzeichnet**,
   daß neben der Kunststoffabdichtung Stromelektroden (6) und elektrische Potentialelektroden (7,8) in festem Abstand zueinander fest installiert sind.

5. Leckanzeigeeinrichtung nach einem oder mehreren der Ansprüche 1, 2, und 3,
   **dadurch gekennzeichnet**,
   daß neben der Kunststoffabdichtung Stromelektroden (6) und elektrische Potentialelektroden (7,8) nicht fest eingebaut sind, sondern mit beliebigem Abstand zueinander an beliebigen Stellen in dem elektrisch leitenden Material (5), welches die Kunststoffabdichtung umgibt, positionierbar sind.

6. Leckanzeigeeinrichtung nach einem oder mehreren der Ansprüche 1, 2, und 3,
   **dadurch gekennzeichnet**,
   daß eine der Stromelektroden oder eine der elektrischen Potentialelektroden in weitem Abstand von der Kunststoffabdichtung in dem elektrisch leitenden Material positioniert ist.

7. Leckanzeigeeinrichtung nach einem oder mehreren der Ansprüche 1, 2, 3 und 6,
   **dadurch gekennzeichnet**,
   daß die Stromelektrode (6) und die elektrischen Potentialelektroden (7,8) bzw. die elektrische Potentialelektrode und die Stromelektroden, die neben der Kunststoffabdichtung angeordnet sind, jeweils aus mehreren örtlich verteilten Stromelektroden bzw. elektrischen Potentialelektroden bestehen.

8. Leckanzeigeeinrichtung nach einem oder mehreren der Ansprüche 1, 2, 3, 6 und 7,
   **dadurch gekennzeichnet**,
   daß die metallisch elektrisch leitende Schicht in der Kunststoffwandung in mehrere elektrisch isolierte Stromelektroden bzw. elektrische Potentialelektroden unterteilt ist.

9. Verfahren zur Leckanzeige für Kunststoffabdichtungen in Form von dreischichtigen Kunststoffwandungen von Rohren, Formteilen, Schächten, Kanälen, Behältern, Wannen, Flächen oder dergleichen, wobei in die 3-schichtig und vollflächig aufgebaute Kunststoffwandung eine metallisch elektrisch leitende Schicht eingebunden ist, die als eine erste Stromelektrode verwendet wird, wobei über die erste Stromelektrode und eine zweite Stromelektrode in einem die Kunststoffdichtung umgebenden elektrisch leitenden Material ein eingespeister Strom fließt,
   **dadurch gekennzeichnet**,
   zur Leckortung der eingespeiste Strom gemessen wird, daß mindestens eine Spannung zwischen wenigstens zwei im Abstand zueinander in dem die Kunststoffdichtung umgebenden elektrisch leitenden Material eingebetteten Potentialelektroden gemessen wird und daß aus den Ergebnissen der Strommessung und der Spannungsmessung ein scheinbarer spezifischer elektrischer Widerstand ermittelt wird.

10. Verfahren zur Leckanzeige für Kunststoffabdichtungen in Form von dreischichtigem Kunststoffwandungen von Rohren, Formteilen, Schächten, Kanälen, Behältern, Wannen, Flächen oder dergleichen, wobei in die 3-schichtig und vollflächig aufgebaute Kunststoffwandung eine metallisch elektrisch leitende Schicht eingebunden ist, die zur Leckanzeige verwendet wird,
    **dadurch gekennzeichnet**,
    daß zur Leckortung die metallisch elektrisch leitende Schicht als eine erste Potentialelektrode verwendet wird, deren Potential gegenüber wenigstens einer zweiten Potentialelektrode in einem die Kunststoffabdichtung umgebenden elektrisch leitenden Material als Spannung gemessen wird, wenn ein Strom über eine erste stromelektrode und eine zweite Stromelektrode, die im gegenseitigen Abstand in dem die Kunststoffdichtung umgebenden elektrisch leitenden Material eingebettet sind, eingespeist wird, daß der strom gemessen wird, und daß aus den Ergebnissen der Strommessung und der Spannungsmessung ein scheinbarer spezifischer elektrischer widerstand ermittelt wird.

11. Verfahren nach Anspruch 9 oder 10,
    **dadurch gekennzeichnet**,
    daß vor dem Einleiten des Stroms und den Messungen die Stromelektroden und die Potentialelektroden mit beliebigem Abstand zueinander an beliebigen Stellen in dem die Kunststoffabdichtung umgebenden elektrisch leitenden Material positioniert werden.

12. Verfahren nach Anspruch 9 oder 10,
    **dadurch gekennzeichnet**,
    daß eine fest installierte Anordnung von mehr als zwei Stromelektroden und/oder mehr als zwei Potentialelektroden verwendet wird, wobei die in die Kunststoffwandung eingebundene metallische Schicht als eine der Stromelektroden oder eine der Potentialelektroden verwendet wird, bei dem nach Durchführung einer ersten Strommessung des über zwei der Stromelektroden fließenden Stroms und einer ersten Spannungsmessung der zwischen zwei der Potentialelektroden infolge des Stroms auftretenden Spannung die Stromelektroden und/oder die Potentialelektroden vor einer weiteren Strommessung und einer weiteren Spannungsmessung umgeschaltet werden.

13. Verfahren nach Anspruch 12,
**dadurch gekennzeichnet**,
daß bei Verwendung einer entfernt angeordneten Stromelektrode, die gegenüber den Potentialelektroden und den übrigen Stromelektroden relativ weit entfernt angeordnet ist, die entfernt angeordnete Stromelektrode nicht umgeschaltet wird.

14. Verfahren nach Anspruch 12,
**dadurch gekennzeichnet**,
daß bei Verwendung einer entfernt angeordneten Potentialelektrode, die gegenüber den übrigen Potentialelektroden und den Stromelektroden relativ weit entfernt angeordnet ist, die entfernt angeordnete Potentialelektrode nicht umgeschaltet wird.

Fig.1

Europäisches
Patentamt

**EUROPÄISCHER RECHERCHENBERICHT**

Nummer der Anmeldung

EP 99 12 2356

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 5 661 406 A (LAINE DAREN L ET AL) 26. August 1997 (1997-08-26) * Zusammenfassung; Abbildungen 1-6 * * Spalte 1, Zeile 15 - Zeile 29 * * Spalte 3, Zeile 59 - Spalte 5, Zeile 41 * * Spalte 7, Zeile 22 - Zeile 52 * --- | 1-14 | G01M3/40 G01M3/18 G01V3/08 G01M3/04 |
| Y | DE 196 00 655 A (GEOTEAM GES FUER HYDROGEOLOGIE) 24. Juli 1997 (1997-07-24) * Zusammenfassung; Abbildungen 4-6 * * Spalte 3, Zeile 27 - Spalte 5, Zeile 50 * --- | 1-14 | |
| Y | US 4 110 739 A (KIDD JOHN A) 29. August 1978 (1978-08-29) * Zusammenfassung; Abbildungen 1-7 * * Spalte 1, Zeile 26 - Zeile 33 * * Spalte 2, Zeile 27 - Spalte 3, Zeile 9 * --- | 1-14 | |
| Y | US 3 252 155 A (LYLL S. SURTEES ET AL.) 17. Mai 1966 (1966-05-17) * Abbildung 2 * * Spalte 1, Zeile 34 - Spalte 2, Zeile 23 * * Spalte 3, Zeile 3 - Zeile 69 * --- | 1-14 | **RECHERCHIERTE SACHGEBIETE (Int.Cl.7)** G01M G01V G01N |
| A | DE 199 12 478 A (ORPHEUS GEOPHYSIK GES FUER BAU) 7. Oktober 1999 (1999-10-07) * Spalte 1, Zeile 3 - Spalte 2, Zeile 68; Abbildungen 1,2 * ----- | 1-14 | |

Der vorliegende Recherchenbericht wurde für alle Patentansprüche erstellt

| Recherchenort | Abschlußdatum der Recherche | Prüfer |
|---|---|---|
| MÜNCHEN | 27. Januar 2000 | Helm, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 99 12 2356

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2000

| Im Recherchenbericht angeführtes Patentdokument | | Datum der Veröffentlichung | Mitglied(er) der Patentfamilie | | Datum der Veröffentlichung |
|---|---|---|---|---|---|
| US 5661406 | A | 26-08-1997 | GB | 2328747 A | 03-03-1999 |
| DE 19600655 | A | 24-07-1997 | KEINE | | |
| US 4110739 | A | 29-08-1978 | KEINE | | |
| US 3252155 | A | 17-05-1966 | KEINE | | |
| DE 19912478 | A | 07-10-1999 | DE | 29805810 U | 16-07-1998 |

EPO FORM P0461

Für nähere Einzelheiten zu diesem Anhang : siehe Amtsblatt des Europäischen Patentamts, Nr.12/82